# EUROPEAN PATENT APPLICATION

(11) **EP 3 112 805 A1**
(43) Date of publication of application: **04.01.2017**
(21) Application number: 16172270.7
(22) Date of filing: 31.05.2016
(51) Int. Cl.: G01C 21/00

(54) **NAVIGATION METHOD, SMART TERMINAL DEVICE AND WEARABLE DEVICE**

(30) Priority: 30.06.2015 CN 201510375456
(71) Applicant: Baidu Online Network Technology Beijing Co., Ltd., Beijing 100085 (CN)
(72) Inventor: Tianjian, Deng, 100085 Beijing (CN); Zhipeng, Zhou, 100085 Beijing (CN); Binglin, Zhang, 100085 Beijing (CN); Lihui, Xun, 100085 Beijing (CN)
(74) Representative: dompatent von Kreisler Selting Werner - Partnerschaft von Patent- und Rechtsanwälten mbB

(57) **Abstract**

The embodiments of the present invention provide a method of navigation, smart terminal device and wearable device. The method comprises: establishing a connection with a navigation application; acquiring navigation data from the navigation application; and publishing the navigation data to a specified data service interface, so as to allow an application device connected to the data service interface to acquire navigation data. The solutions of the present invention provides a method for data transmission for navigation service between the existing navigation APP and an application device, and thus provide navigation data in a convenient and low-cost way.

## Description

### TECHNICAL FIELD

The present invention relates to information processing technology, more particularly to a method of navigation, a smart terminal device, and a wearable device.

### BACKGROUND

With the development of car networking and the rise of wearable devices (smart watches, glasses), it has become an inevitable trend to apply navigation information to these products. Currently, there exist two ways to display navigation guide information through HUD (Head Up Display). One way is to develop an APP including the functions of route calculating and navigation and have the APP connected to the HUD through a software development kit (SDK) that is integrated with navigation functions; that is, the navigation function is implemented through integrating a HUD plug-in into a navigation APP, incorporating logics for HUD displaying. Another way is to run a reduced version of a navigation APP directly on an on-board device for the navigation functions. Both methods can be applied on wearable devices such as smart watches and other application devices.

Notwithstanding the aforementioned, the prior art solutions have the following drawbacks. First, using the navigation SDK has large development cost, and the research and development staff need to be familiar with navigation technique, and also need technical support from the navigation radar (RD); second, the SDK version is updated slowly, with large lagging, features of a new version cannot be reflected in the product in the first time; third, using the navigation plug-ins for developing requires a large amount of learning, the plug-ins need to go through review processes, the existing plug-ins are developed by integrated navigation RD, requiring a lot of manpower for maintenance; and finally, running the navigation APP directly on an application device costs a lot, and updating of navigation information is slow.

### SUMMARY

Embodiments of the present invention provides a method of navigation, smart terminal device and wearable device, provides a method for data transmission for navigation service between the existing navigation APP and an application device such as a wearable device, and thus provides navigation data in a convenient and low-cost way.

To achieve the aforementioned object, an embodiment of the present invention provides a navigation method, comprising establishing a connection with a navigation application; acquiring navigation data from the navigation application; and publishing the navigation data to a specified data service interface, so as to allow an application device connected to the data service interface to acquire the navigation data.

Further, the method further comprises: receiving a navigation operation command from the application device via the data service interface; sending the navigation operation command to the navigation application through the connection established with the navigation application, so as to allow the navigation application to process the navigation operation command.

Preferably, the method further comprises: receiving a request of subscription of navigation service from the application device via the data service interface, and sending the navigation data to the application device via the data service interface based on the request of subscription of navigation service.

An embodiment of the present invention provides another navigation method, comprising: establishing a connection with a data service interface of a smart terminal device; acquiring navigation data via the data service interface, the navigation data being acquired by the smart terminal device from a navigation application; providing navigation based on the navigation data.

Preferably, the method further comprises: receiving navigation search information input by a user; generating a navigation operation command based on the navigation search information; sending the navigation operation command to the data service interface of the smart terminal device.

Further, the method further comprises: sending a request of subscription of navigation service to the data service interface; receiving the navigation data sent from the smart terminal device via the data service interface.

An embodiment of the present invention provides a smart terminal device, comprising: a navigation application connection module for establishing a connection with a navigation application; a navigation data acquisition module for acquiring navigation data from the navigation application; and a navigation data publication module for publishing the navigation data to a specified data service interface, so as to allow an application device connected to the data service interface to acquire the navigation data.

Further, the device further comprises: a navigation command receiving module for receiving a navigation operation command from the application device via the data service interface; a navigation command forwarding module for sending the navigation operation command to the navigation application through the connection established with the navigation application, so as to allow the navigation application to process the navigation operation command.

Preferably, the device further comprises: a subscription transceiver module for receiving a request of subscription of navigation service from the application device via the data service interface, and sending the navigation data to the application device via the data service interface based on the request of subscription of navigation service.

An embodiment of the present invention provides a wearable device, comprising: a service interface connection module for establishing a connection with a data service interface of a smart terminal device; a navigation data acquisition module for acquiring navigation data via the data service interface, the navigation data being acquired by the smart terminal device from a navigation application; and a navigation execution module for providing navigation based on the navigation data.

Preferably, the device further comprises: a navigation search information receiving module for receiving navigation search information input by a user; a navigation operation command generation module for generating a navigation operation command based on the navigation search information and a navigation operation command transmission module for sending the navigation operation command to the data service interface of the smart terminal device.

Further, the device further comprises: a subscription request transmission module for sending a request of subscription of navigation service to the data service interface, wherein the navigation data acquisition module is also used for receiving the navigation data sent from the smart terminal device via the data service interface.

The method of navigation, smart terminal device, and wearable device provided by the embodiments of the present invention publish navigation data acquired from a navigation application through establishing of a specified data service interface in a smart terminal device, so as to allow a third party application device such as a wearable device to acquire navigation data and carry out navigation operations. With this solution, a user can acquire desired navigation data and provide navigation conveniently and fast from the smart terminal device via a third-party application device such as an on-board device, and a wearable device, without self-running logics of navigation route calculation.

### BRIEF DESCRIPTION OF THE DRAWINGS

Fig. 1 is the flowchart of one embodiment of the navigation method of the present invention;
Fig. 2 is the flowchart of another embodiment of the navigation method of the present invention;
Fig. 3 illustrates one exemplary view where the application device displays the acquired navigation data according to the present invention;
Fig. 4 illustrates another exemplary view where the application device displays the acquired navigation data according to the present invention;
Fig. 5 is the flowchart of another embodiment of the navigation method of the present invention;
Fig. 6 is a schematic view of the structure of the smart terminal device according to one embodiment of the present invention;
Fig. 7 is a schematic view of the structure of the smart terminal device according to another embodiment of the present invention;
Fig. 8 is a schematic view of the structure of the wearable device according to one embodiment of the present invention;
Fig. 9 is a schematic view of the structure of the wearable device according to another embodiment of the present invention.

### DETAILED DESCRIPTION

The basic concept of the present invention is: establishing, on a smart terminal device, a data service interface dedicated to providing and acquiring navigation data; acquiring navigation data through a connection established with a navigation application, and publishing the navigation data through the data service interface, so as to allow the application device connected to the data service interface to acquire the navigation data and thus to establish an interconnection dedicated to the navigation data service between the smart terminal device and the application device.

### Embodiment I

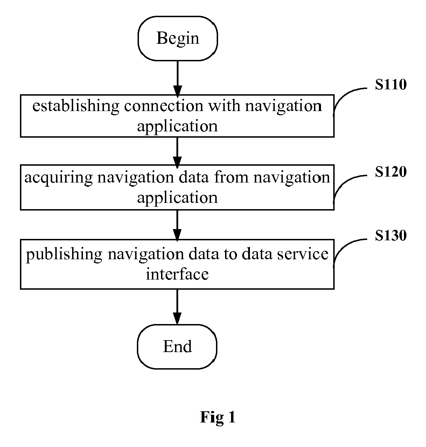

Fig. 1 is the flowchart of one embodiment of the navigation method of the present invention. The principle device for method execution may be a smart terminal device, such as a cell phone, an ipad, or a personal computer; in the meanwhile, a navigation application, such as Baidu Map, run simultaneously in the smart terminal device.

Referring to Fig. 1, in step S110, a connection with a navigation application is established.

A smart terminal device and the navigation application can be connected through establishing a data channel. For example, the navigation application sends, through an internal data interface, navigation-related data to a client terminal, plug-in, or device of a specified software in the smart terminal device, to carry out data exchange.

In step S120, navigation data is acquired from the navigation application.

For example, after a connection is established between the client terminal and the navigation application, the navigation application can still provide navigation to the vehicle of interest or a user according to normal navigation logics; and the client terminal can monitor navigation information generated by the navigation application in real time, and relevant navigation data can be acquired via the data acquisition function of the smart terminal device; or the navigation application sends, with an internal data interface, generated navigation data to the client terminal regularly or after being triggered by a client terminal request.

In the aforementioned step, the navigation data may include map data and navigation route data. For example, the navigation route data may further include: steering icons, speed limits, distance to electronic eyes, kilometers to destination, distance to next turn, current speed, and etc.

In step S130, the navigation data is published to a specified data service interface so as to allow an application device connected to the data service interface to acquire navigation data.

After the client terminal acquires the navigation data, the navigation data can be published from the smart terminal device to outside via a specified data service interface provided in the smart terminal device. For example, the client terminal can send the navigation data through broadcasting. When the application device is connected to the data service interface, it can actively acquire the navigation data through monitoring data publishing from the data service interface. Alternatively, the application device can subscribe, in advance, to navigation service in the client terminal or the navigation application, when the client terminal acquires navigation data from the navigation application, the navigation data is sent, via the data service interface, to each application device that subscribes to the navigation service. Here, the way the application device acquires navigation data from the data service interface is not limited.

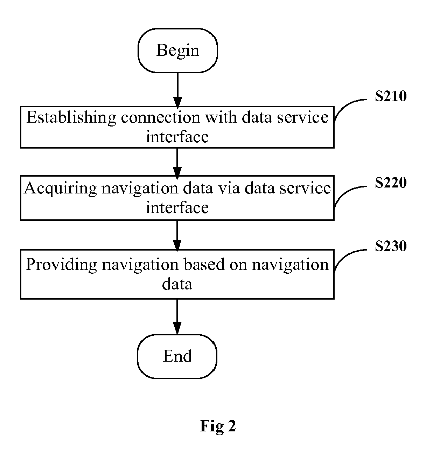

In the aforementioned step, the application device may be an on-board device or a wearable device, e.g., the wearable device can specifically be a smart glass, a smart watch, and etc. The application device can also be the application device of the embodiment shown in Fig. 2.

The aforementioned data service interface may establish a connection with the aforementioned application device via one of Bluetooth, infrared, wireless WiFi, and wires, to carry out data transmission.

The navigation method according to the embodiment of the present invention uses a smart terminal device as the principal device for method execution, which acquires navigation data through establishing a connection with the navigation application of the current machine, publishes the navigation data via a data service interface, so as so allow an application device connected to the data service interface to acquire navigation data, and thus to establish an interconnection dedicated to navigation data service between the smart terminal device and the application device.

### Embodiment II

Fig. 2 is the flowchart of another embodiment of the navigation method of the present invention. The principle device for method execution may be an application device with multi-media functions of voice playing, image illustration, and etc., such as an on-board device and a wearable device.

Referring to Fig. 2, in step S210, a connection with a data service interface of a smart terminal device is established.

In the present embodiment, in addition to a navigation application operating in the smart terminal device, a data service interface dedicated to sending navigation-related information is provided. In order to acquire navigation-related information from the smart terminal device, an application device must first establish a connection with the data service interface. Alternatively, the application device and the data service interface can be connected via one of Bluetooth, infrared, wireless WiFi, and wires, so as to build a data transmission channel.

In step S220, navigation data is acquired via the data service interface, the navigation data was acquired by the smart terminal device from the navigation application.

After the navigation application provided in the smart terminal device generates navigation data, The aforementioned data service interface can be used to publish the navigation data, so as so allow the application device to acquire the navigation data.

Specifically, the smart terminal device acquires navigation data through executing the steps of the method shown in Fig. 1, and then publishes the navigation data from the smart terminal device to outside via the aforementioned specified data service interface. For example, the smart terminal device may publish the navigation data through broadcasting. When the application device is connected to the data service interface, it can actively acquire navigation data through monitoring data publishing from the data service interface. Alternatively, the application device can subscribe, in advance, to navigation service in a specified client terminal or the navigation application, after the smart terminal device acquired navigation data from the navigation application, the navigation data is sent, via the data service interface, to each application device that subscribes to the navigation service. Here, the way the application device acquires navigation data from the data service interface is not limited.

In the aforementioned step, the navigation data may include map data and navigation route data. For example, the navigation route data may further include: steering icons, speed limits, distance to electronic eyes, kilometers to destination, distance to next turn, current speed, and etc.

In step S230, navigation is provided based on the navigation data.

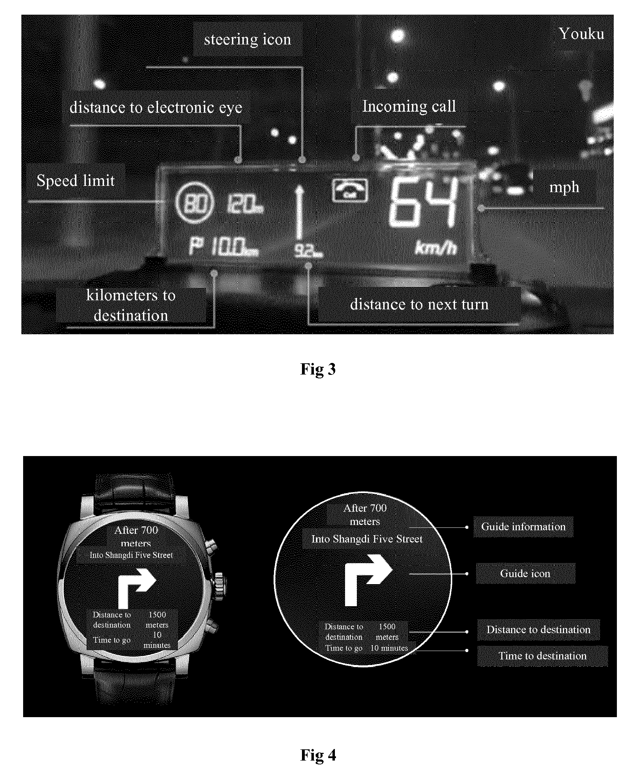

After the application device acquires the navigation data, the navigation data is displayed via a built-in or external module, such as an image displaying module or a voice module, so as to allow a user to view or listen, so as to provide navigation to the user. For example, Figs. 3 and 4 respectively illustrate exemplary views where the application device displays acquired navigation data. Among the figures, in Fig. 3, an on-board device displays the navigation data via a built-in HUD; in Fig. 4, a smart watch displays the navigation data via the panel of the watch. As can be understood, The aforementioned logical operations carried out in the application device can be accomplished with a built-in APP in the application device.

The navigation method according to the embodiment of the present illustrates one navigation method with the application device as the principal device for method execution. That is, after a connection is established between the application device and the data service interface of the smart terminal device, the application device acquires navigation data published from the data service interface, and navigation is provided to a user based on the navigation data; in the meanwhile, an interconnection dedicated to navigation data service is established between the smart terminal device and the application device, as so to acquire navigation data from the smart terminal device.

### Embodiment III

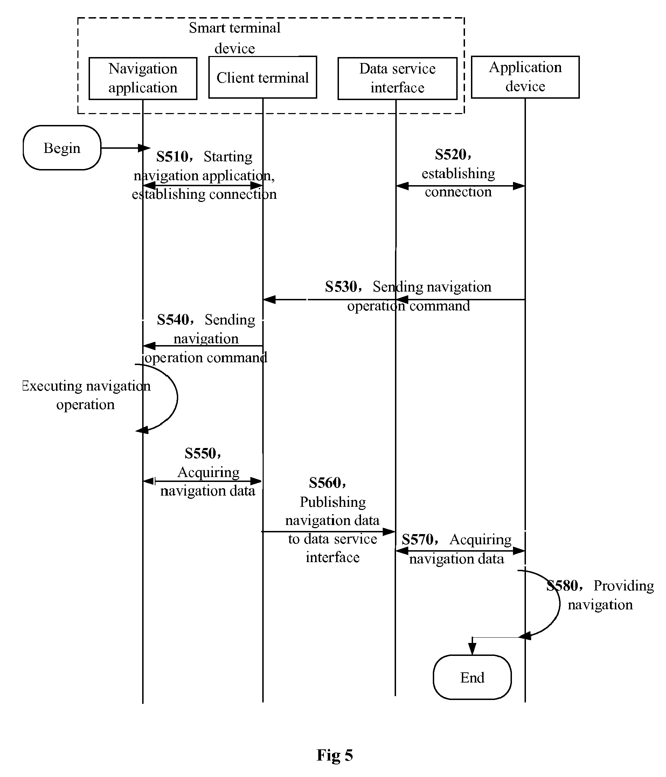

Fig. 5 is the flowchart of another embodiment of the navigation method of the present invention. The principle device for method execution relates to the smart terminal device in the embodiment shown in Fig. 1 and the application device in the embodiment shown in Fig. 2. As shown in Fig. 5, the method of the present embodiment is a specific implementation of one navigation method combining the embodiments shown in Figs. 1 and 2.

Referring to Fig. 5, in step S510, the navigation application of the machine is started, a connection is established between the smart terminal device and the navigation application. The process in step 510 is similar to that in the aforementioned step S110.

In the aforementioned step, starting the navigation application of the machine can be done directly by the user in the operating system of the smart terminal device, or it can be done through being triggered by a client terminal after the client terminal is started.

In step S520, a connection is established between the application device and a data service interface of the smart terminal device. The process in step 520 is similar to that in the aforementioned step S210.

In step S530, the smart terminal device receives a navigation operation command from the application device via the data service interface.

Specifically, the operation of sending navigation data to the application device with a specified built-in software client terminal via the data service interface can be triggered by the application device sending a navigation operation command to the client terminal via the data service interface. The step for the application device to generate and send navigation operation command may comprise the following:
Step 1, the application receives navigation search information from the user; for example, the user may input, through typing or voices, navigation search information he wants to know via a navigation search interface or operation keys provided by the application device, the navigation search information my include: search information relating to a navigation map and / or a navigation route.

Step 2, the application device generates a navigation operation command based on the navigation search information; for example, the application device analyzes and processes the navigation search information, and generates a navigation operation command that can be recognized and carried out by the navigation application. The navigation operation command may be a command to find a route through computation, or a command to locate a geographic area.

Step 3, the application device sends the navigation operation command to the data service interface of the smart terminal device, so as to allow the client terminal to receive the navigation operation command via the data service interface and use them to acquire corresponding navigation data.

In step S540, the smart terminal device sends the navigation operation command to the navigation application through the connection established with the navigation application, so as to allow the navigation application to process the navigation operation command.

Specifically, after receiving the navigation operation command, the navigation application analyzes the navigation operation command, extracts the navigation operation to be executed, and then carries out corresponding navigation operation with internal navigation logics, and generates corresponding navigation data.

In step S550, the smart terminal device acquires navigation data from the navigation application. The process in step 550 is similar to that in the aforementioned step S120.

In step S560, the smart terminal device publishes the navigation data to the specified data service interface. The process in step S560 is similar to that in the aforementioned step S130.

In step S570, the application device acquires navigation data through the data service interface. The process in step 570 is similar to that in the aforementioned step S220.

Specifically, the application device may monitor the data service interface for data stream, to determine whether there is navigation data published, and then to collect and acquire the navigation data that is monitored to be there.

Alternatively, the application device can send, in advance, a request of subscription of navigation service to the data service interface, so as to subscribe to the navigation service. After the smart terminal device receives a request of subscription of navigation service from the data service interface, it lists the application device sending the request as one to receive the navigation service.

Correspondingly, after the smart terminal device acquires navigation data from the navigation application, it sends the navigation data directly to the application device that has subscribed to the navigation service via the data service interface, so as to carry out an active publishing of the navigation data to the application device.

In step S580, the application device provides navigation based on the navigation data. The process in step 580 is similar to that in the aforementioned step S230.

The navigation method according to the embodiment of the present invention uses the smart terminal device and the application device from a third party as the principal devices for method execution, and provides, in combination, a way to provide navigation data in the application device. On the basis of a combination of Fig. 1 and Fig. 2, the present embodiment also shows an implementation where a smart terminal device acquires navigation data from the navigation application based on a received navigation operation command and publishes the navigation data through receiving a request of subscription of navigation service; it also shows an implementation where an application device generates a navigation operation command, uses the navigation operation command to acquire navigation data, and acquires navigation data through sending a request of subscription of navigation services to the data service interface. Adding these steps make it easier and faster to provide and acquire navigation data from the smart terminal device.

### Embodiment IV

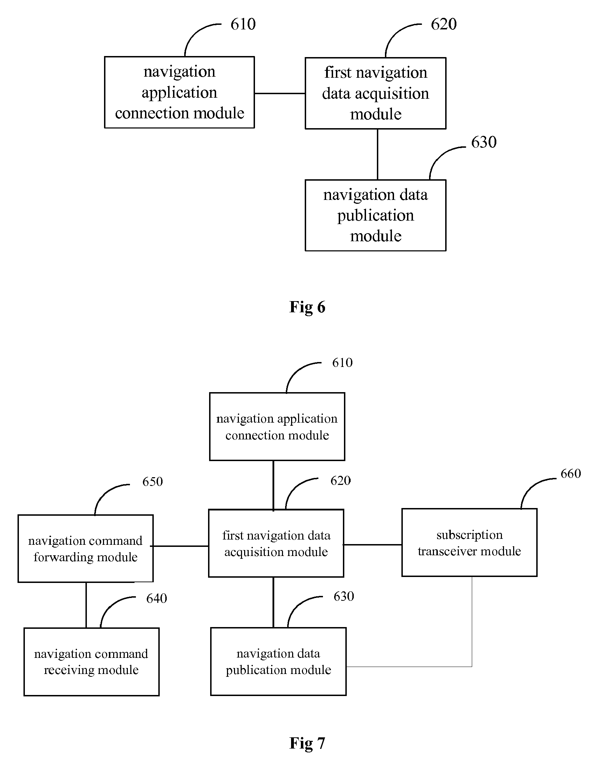

Fig. 6 is a schematic view of the structure of the smart terminal device according to one embodiment of the present invention. As shown in Fig. 6, the smart terminal device can be used for executing the method of the embodiment shown in Fig. 1.

Referring to Fig. 6, the smart terminal device comprises a navigation application connection module 610, a first navigation data acquisition module 620, and a navigation data publication module 630.

The navigation application connection module 610 is used to establish a connection with the navigation application; the first navigation data acquisition module 620 is used to acquire navigation data from the navigation application; the navigation data publication module 630 is used to publish the navigation data to a specified data service interface, so as so allow an application device connected to the data service interface to acquire navigation data.

The smart terminal device according to the embodiments of the present invention acquires navigation data through establishing a connection with a navigation application running in the machine, publishes the navigation data via a data service interface, so as so allow an application device connected to the data service interface to acquire navigation data, and thus an interconnection dedicated to navigation data service is established between the smart terminal device and the application device, so as to provide navigation data to the application device.

### Embodiment V

Figure 7 is a schematic view of the structure of the smart terminal device according to another embodiment of the present invention, it can be considered to be a specific implementation structure of the embodiment shown in Fig. 6 for executing the steps of the method using a smart terminal device as the principal device for method execution in the embodiment shown in Fig. 5.

Referring to Figure 7, the smart terminal device comprises a navigation application connection module 610, a first navigation data acquisition module 620, and a navigation data publication module 630, which are similar to those in Fig. 6.

Further to the above, the smart terminal device shown in FIG. 7 may further comprises: a navigation command receiving module 640, for receiving a navigation operation command sent from the application device via the data service interface; a navigation command forwarding module 650, for sending the navigation operation command to the navigation application through the connection established with the navigation application, so as to allow the navigation application to process the navigation operation command.

Further, The aforementioned smart terminal device further comprises:
a subscription transceiver module 660, for receiving a request of subscription of navigation service from the application device via the data service interface, and sending navigation data to the application device according to the request of subscription of navigation service via the data service interface.

The smart terminal device according to the embodiment of the present invention, on the basis of the embodiment shown in Fig. 6, further illustrates an implementation of acquiring navigation data from the navigation application based on a received navigation operation command and publishing navigation data through receiving a request of subscription to navigation service. Adding these functions makes it easier and faster to provide navigation data from the smart terminal device.

### Embodiment VI

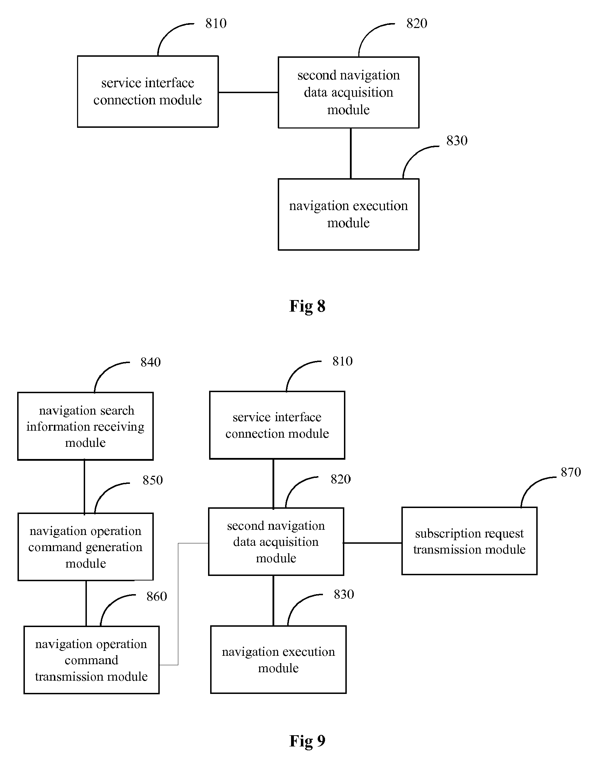

Fig. 8 is a schematic view of the structure of the wearable device according to one embodiment of the present invention, it may be used to execute the steps of the method in the embodiment shown in Fig. 2.

Referring to Fig. 8, the wearable device comprises a service interface connection module 810, a second navigation data acquisition module 820, and a navigation execution module 830.

The service interface connection module 810 is used to establish a connection with the data service interface of the smart terminal device; the second navigation data acquisition module 820 is used to acquire navigation data via the data service interface, the navigation data was acquired by the smart terminal device from the navigation application; the navigation module 830 is used to provide navigation based on the navigation data.

The wearable device according to the embodiment of the present invention establish a connection with a data service interface of the smart terminal device, and then acquires navigation data published from the data service interface, and provides navigation to a user based on the navigation data; in the meanwhile it establishes an interconnection dedicated to the navigation data service between the smart terminal device and the application device, so as to acquire navigation data from the smart terminal device.

### Embodiment VII

Fig. 9 is a schematic view of the structure of the wearable device according to another embodiment of the present invention, it can be considered to be a specific implementation structure of the embodiment shown in Fig. 8 for executing the steps of the method using an application device as the principle device for method execution in the embodiment shown in Fig. 5.

Referring to Fig. 9, the wearable device comprises a service interface connection module 810, a second navigation data acquisition module 820, and a navigation execution module 830, which are similar to corresponding modules in Fig. 8.

Further to the above, the smart terminal device further comprises: a navigation search information receiving module 840 for receiving search information input by a user; a navigation operation command generation module 850 for generating a navigation operation command based on the navigation search information; a navigation operation command transmission module 860, for sending the navigation operation command to the data service interface of the smart terminal device.

Further, the above wearable device further comprises: a subscription request transmission module 870 for sending a request of subscription of data service to the data service interface; the second navigation data acquisition module 820 is also used for acquiring navigation data from the smart terminal device via the data service interface.

On the basis of the embodiment of the device shown in Fig. 8, the wearable device according to the embodiment of the present invention further illustrates an implementation of generating a navigation operation command, acquiring navigation data from the navigation application based on a received navigation operation command, and acquiring navigation data through sending a request of subscription of navigation service to the data service interface. Adding these steps makes it easier and faster to provide navigation data from the smart terminal device.

The aforementioned methods and devices according to the present invention may be implemented in a hardware or a firmware, or implemented as a software or computer codes stored in a recording medium (such as a CD ROM, RAM, floppy disk, hard disk, or magneto-optical disk), or implemented as computer codes that can be downloaded and are originally stored in a remote recording medium or a non-volatile machine-readable medium and will be stored in a local recording medium; accordingly, the methods described herein may be handled by a software stored in a medium using a general computer, a special processor or programmable or dedicated hardware (such as ASIC or FPGA). As can be understood, a computer, a processor, a microprocessor controller or programmable hardware includes a storage assembly (e.g., RAM, ROM, flash memory, etc.) that can store or receive a software or computer codes, when the computer software or computer codes are accessed and executed by the processor or hardware, the processing method described herein is carried out. In addition, when a general computer accesses codes that implements the processes shown herein, the execution of the codes will convert the general computer to a special computer for executing the processes shown herein.

The aforementioned are only specific embodiments of the present invention, the scope of the present invention is not limited thereto, and any one skilled in the art can readily think of changes or replacements within the technical scope of the present invention, which should fall within the scope of the present invention. Accordingly, the scope of the invention should be those the claims seek to protect.

## Claims

1. A navigation method, wherein the method comprises:
establishing a connection with a navigation application;
acquiring navigation data from the navigation application;
publishing the navigation data to a specified data service interface, so as to allow an application device connected to the data service interface to acquire the navigation data.

2. The method according to claim 1, wherein the method further comprises:
receiving a navigation operation command from the application device via the data service interface;
sending the navigation operation command to the navigation application through the connection established with the navigation application, so as to allow the navigation application to process the navigation operation command.

3. The method according to claim 1 or 2, wherein the method further comprises:
receiving a request of subscription of navigation service from the application device via the data service interface, and sending the navigation data to the application device via the data service interface based on the request of subscription of navigation service.

4. A navigation method, wherein the method comprises:
establishing a connection with a data service interface of a smart terminal device;
acquiring navigation data via the data service interface, the navigation data being acquired by the smart terminal device from a navigation application;
providing navigation based on the navigation data.

5. The method according to claim 4, wherein the method further comprises:
receiving navigation search information input by a user;
generating a navigation operation command based on the navigation search information;
sending the navigation operation command to the data service interface of the smart terminal device.

6. The method according to claim 4 or 5, wherein the method further comprises:
sending a request of subscription of navigation service to the data service interface;
receiving the navigation data sent from the smart terminal device via the data service interface.

7. A smart terminal device, wherein the device comprises:
a navigation application connection module for establishing a connection with a navigation application;
a navigation data acquisition module for acquiring navigation data from the navigation application;
and a navigation data publication module for publishing the navigation data to a specified data service interface, so as to allow an application device connected to the data service interface to acquire the navigation data.

8. The device according to claim 7, wherein the device further comprises:
a navigation command receiving module for receiving a navigation operation command from the application device via the data service interface;
a navigation command forwarding module for sending the navigation operation command to the navigation application through the connection established with the navigation application, so as to allow the navigation application to process the navigation operation command.

9. The device according to claim 7 or 8, wherein the device further comprises:
a subscription transceiver module for receiving a request of subscription of navigation service from the application device via the data service interface, and sending the navigation data to the application device via the data service interface based on the request of subscription of navigation service.

10. A wearable device, wherein the device comprises:
a service interface connection module for establishing a connection with a data service interface of a smart terminal device;
a navigation data acquisition module for acquiring navigation data via the data service interface, the navigation data being acquired by the smart terminal device from a navigation application;
and a navigation execution module for providing navigation based on the navigation data.

11. The device according to claim 10, wherein the device further comprises:
a navigation search information receiving module for receiving navigation search information input by a user;
a navigation operation command generation module for generating a navigation operation command based on the navigation search information;
and a navigation operation command transmission module for sending the navigation operation command to the data service interface of the smart terminal device.

12. The device according to claim 10 or 11, wherein the device further comprises:
a subscription request transmission module for sending a request of subscription of navigation service to the data service interface,
wherein the navigation data acquisition module is also used for receiving the navigation data sent from the smart terminal device via the data service interface.
